# EUROPEAN PATENT APPLICATION

(11) **EP 1 724 245 A1**
(43) Date of publication of application: **22.11.2006**
(21) Application number: 06252609.0
(22) Date of filing: 19.05.2006
(51) Int. Cl.: C04B 35/83, F16D 69/02

(54) **Carbon-carbon composite preform made with carbon fiber and pitch binder**

(30) Priority: 20.05.2005 US 133228
(71) Applicant: Honeywell International Inc., Morristown, New Jersey 07960 (US)
(72) Inventor: Simpson, Allen H., Buchanan, MI 49107 (US); Fryska, Slawomir T., Granger, IN 46530 (US); LaForest, Mark L., Granger, IN 46530 (US)
(74) Representative: Hucker, Charlotte Jane

(57) **Abstract**

Process for producing carbon-carbon composite preform, by: providing short carbon fiber segments or short carbon fiber precursor segments; providing pitch in particulate form; combining blend comprising the fiber segments and pitch particles in a mold; subjecting the resulting mixture of fibers and pitch in the mold to an elevated pressure ranging at a temperature above the melting/softening point of the pitch to create an uncarbonized preform; cooling the preform to below its softening point and removing it from the mold; placing the preform in a constraint fixture; and carbonizing the combined components in the constraint fixture at an elevated temperature for a period of time of sufficient to provide a preform having a density in the range 0.8-1.6 grams per cubic centimeter.

## Description

### FIELD OF THE INVENTION

This invention relates to carbon-carbon composite materials that are particularly suitable for use in making high performance brake discs. One embodiment of the present invention is a process for producing a carbon-carbon composite preform from short carbon fiber segments or short carbon fiber precursor segments, and pitch, in particulate form, having a softening point of at least 80° C. Another embodiment of the present invention is a carbon-carbon composite preform made with carbon fiber and pitch binder. Yet another embodiment of the present invention is a brake disc made from a carbon-carbon composite material produced in accordance with the present invention.

### BACKGROUND OF THE INVENTION

US 5,871,838 (Lockheed Martin Energy Systems, Inc.) discloses making a densified carbon matrix carbon fiber composite preform by vacuum molding an aqueous slurry of carbon fibers and carbonizable organic powder to form a molded part. According to this patent, its technology "... relates to an innovative process for the fabrication of carbon-carbon composites that offers potentially large reductions in processing time, allowing finished carbon-carbon composite brake discs to be fabricated in 1-4 weeks, compared to the more usual 24 plus weeks. Obviously, commensurate reductions in cost can be realized." This disclosure of the '838 patent implicitly recognizes that in the manufacture of carbon-carbon composites for use as brake components, making and carbonizing the carbon-carbon brake preforms and densifying them is an important cost factor.

Thermoset resins are commonly used as binders to fabricate aircraft brake preforms that will be used as friction materials. One of the most commonly used binders is phenolic resin. Typically, preforms are made of carbon fiber or carbon fiber precursor with an architecture defined by a textile process (that is, woven or nonwoven fabric) or are made using loose carbon fiber with a phenolic binder. Preforms made of fibrous textiles only are low in density while preforms made using phenolic binder, while higher in initial density, may not reach desirable high density when densified later.

Phenolic resin can be used as a prepreg with the fiber, or it can be deposited as a powder in layers as the fibers are being deposited in a mold. In some cases, the phenolic resin can be added as a liquid. However, phenolic resins provide a low carbon yield as compared to pitch. Also, the carbon matrix produced by phenolic resin exhibits closed porosity and so tends to prevent CVI/CVD infiltration processes and liquid pitch infiltration processes from filling the blocked pores. This reduces the toughness of the preforms and so limits the final density of materials made using phenolic resins.

The presently disclosed use of pitch binder shortens the overall manufacturing cycle time by virtue of its high carbon yield and resulting facilitated achievement of high density. The process of this invention eliminates the necessity for at least one complete densification cycle as compared to comparable prior art procedures and also generally eliminates the necessity for at least one heat treatment step. When pitch binders were employed previously, attempts to speed up the carbonization process by utilizing higher temperature ramp rates have resulted in pitch binder evaporation or in run-out of the liquid phase binder. The process of the present invention enables the use of pitch binder in a process that provides higher density at lower cost than do comparable prior art procedures.

### SUMMARY OF THE INVENTION

The use of pitch (including coal tar, petroleum, and synthetic pitches) as the binder component in carbon-carbon composite preforms provides higher carbon yields, leading to initial higher density of such preforms after carbonization. Benefits of the present invention include reduction in the total number of densification cycles, which improves cycle times. This lowers capital investment for equipment, reduces inventory, and provides for a more efficient pull system to fill customer orders.

Unlike phenolic resins, pitch binders when carbonized create micro-cracks in the matrix material. This allows a composite to be better infused with pitch in subsequent processing. The micro-cracks also provide larger surface areas upon which Chemical Vapor Deposition (CVD) can occur, resulting in a higher density composite material. For instance, densities with this invention can be tailored for ranges of use between 1.6 g/cc and 2.0 g/cc. The precise density achieved will depend upon how many densification cycles are used, and the extent if any of Resin Transfer Molding (RTM) and/or Vacuum Pressure Infiltration (VPI) and/or CVD treatments. In any case, however, the pitch binder reduces the number of densification steps that are necessary, no matter what preform target density is produced. The total densification cycle with the present invention is approximately 40 days shorter than corresponding conventional processes in which phenolic binders are used.

In one embodiment, the present invention provides a process for producing carbon-carbon composite preforms. The process of the invention includes several steps. Preliminary steps in the process include providing short carbon fiber segments or short carbon fiber precursor segments and providing a pitch in particulate form. The lengths of the fibers used in this invention generally range from 0.25 to 2 inches. One may use previously chopped tow, or one may chop continuous fibers as part of the preform manufacturing process of the invention. The pitch used in this invention generally has a softening point of at least 80°C.

A blend comprising the short fiber or fiber precursor segments and of the pitch particles is combined in a mold. The relative weight amounts of fiber component and pitch component that are combined range from 30:70 to 70:30. For some applications, the relative weight amounts of fiber component and pitch component that are combined is about 50:50. In some cases, additives well known to those skilled in the art to be useful to enhance friction and/or wear properties may be included with the blend. Such additives could be, for instance, powdered titanium carbide, silicon carbide, or similar ceramics, or carbon powders such as graphite powder or carbon black. The friction/wear additives would typically comprise from 0.5 to 5 weight-%, preferably from 1-2 weight-%, of the fiber/binder blend. Preferably, the fiber/binder blend consists essentially of the short fiber or fiber precursor segments and of the pitch particles, and optionally of friction/wear additives as described.

The mixture of fibers and pitch in the mold is then subjected to a pressure ranging from 30 psi to 500 psi, preferredly from 100 psi to 300 psi, at a temperature above the melting/softening point of the pitch but below 350°C to create an uncarbonized preform. Generally, in the interests of economy, one employs a temperature that ranges from 10C° to 30C° abo ve the softening point of the pitch in the mold. After this heat and pressure step, the uncarbonized preform is subsequently cooled to below its softening point and removed from the mold.

Subsequently, the preform is placed in a constraint fixture that allows the preform to retain its shape when heated above the melting point of the pitch binder; and the preform is then carbonized in the constraint fixture at a temperature in the range of 650° C -1500°C for a period of time of from 15 hours -100 hours to provide a preform having a density in the range 0.8-1.6 grams per cubic centimeter.

Another class of embodiments of this invention is the carbon-carbon composite preform products of the process embodiments described above.

Yet another embodiment of the present invention is an improved process for manufacturing a brake disc. This process includes the steps of: providing short carbon fiber segments (e.g., chopped tow) or short carbon fiber precursor segments; providing a pitch in particulate form, said pitch having a softening point of 80° C or greater; combining a blend consisting essentially of said fiber segments and pitch particles (and optionally containing additives such as friction modifiers) in an annular mold cavity having the dimensions of a brake disc; subjecting the resulting mixture of fibers and pitch in the mold to a pressure ranging from 50 psi to 500 psi at a temperature above the melting point of the pitch but below 250°C to create an uncarbonized preform; cooling the preform and removing it from the mold; placing the preform in a constraint fixture that allows the preform to retain its shape when heated above the melting point of the pitch binder; carbonizing the combined components in the constraint fixture at a temperature in the range of 750°C -15 00° C for a period of time of from 15 hours -100 hours to provide a preform having a density in the range 0.8-1.6 grams per cubic centimeter; and finishing the preform employing techniques well know to those skilled in the are in order to provide the brake disc.

### DETAILED DISCLOSURE OF THE INVENTION

THE FIBERS. The fibers that may be used in this invention include carbon fibers derived from polyacrylonitrile (PAN), pitch, rayon, and other carbon fiber precursors. One may also use carbon fiber precursors stabilized so that they will not melt and will yield carbon fibers when heated in an inert atmosphere. Thus the short carbon fiber segments or carbon fiber precursor segments to be used in this invention may be selected from the group consisting of oxidized PAN-based carbon fiber, pitch-based carbon fiber, rayon-derived carbon fiber, stabilized pitch fiber, and partially carbonized oxidized PAN fiber. Stabilized pitch fibers and oxidized PAN fibers have been found to be especially convenient carbon fiber precursors. Typical fiber segment lengths range from ¼inch to 2 inches. Fibers of different lengths may be combined in a single preform in order to impart gradient properties to the preform.

THE BINDER. As the pitch binder component, this invention contemplates coal tar mesophase, coal tar isotropic (e.g., Koppers Coal Tar Isotropic), synthetic mesophase (e.g., AR Mitsubishi Mesophase), petroleum in mesophase or isotropic form, or any other generally similar pitch. The pitch used in this invention typically has a softening point of 80° C or higher, preferably above 140°C. Many pitches that can be used in this invention have softening points in the range 100°C to 200°C. A p itch that is particularly preferred for some application is a mesophase pitch that has a softening point ranging from 285°C to 320°C. The p itch binder in this invention is generally used in particulate form, with the pitch particle typically ranging in diameter from 50 to 500 microns.

PROCESSING. In accordance with this invention, preforms are made by combining fibers and pitch binders in a mold. This may be accomplished, for instance, as disclosed in application Serial No. 10/852,933, filed 25 May 2004, entitled MANUFACTURE OF FUNCTIONALLY GRADED CARBON-CARBON COMPOSITES. The disclosure of SN 10/852,933 is incorporated by reference herein. The materials are then compressed under temperatures that soften or melt the coal tar pitch resin. After compression at elevated temperature for sufficient time, the resin impregnates the matrix formed by the fibers in the mold. The mold is then cooled, still under pressure. Finally the pressure is released and the resin-impregnated fibrous preform is removed from the mold. The loose materials (fibers and binder) in the mold may be e.g. 9 to 10 inches in depth. When a two-piece mold is employed, the loose materials may be contained in one or both sections of the mold (i.e. bottom or top and bottom), depending on the compaction ratio that is employed to obtain a disc/preform at the desired thickness after compaction under temperature and pressure. In the two-piece mold, the compacted material will be totally in the bottom segment of the mold.
The bottom segment of the mold will then be used as a constraint fixture, and will have a top cover (compaction plate) locked in place on it. Preforms typically range in thickness from 1 to 3 inches.

The preform is then placed in a constraint fixture and subjected to a rapid carbonization/stabilization cycle of approximately 80 hours without prior oxidative stabilization. This processing may be accomplished, for instance, as disclosed in application Serial No. 10/764,149, filed 23 January 2004, entitled BINDERLESS PREFORM MANUFACTURE and in application Serial No. 10/942,258, filed 16 September 2004, entitled FIXTURE FOR HOLDING A PREFORM DURING A HEATING PROCESS. The disclosures of SN 10/764,149 and SN 10/942,258 are incorporated by reference herein. Once this stabilization/carbonization cycle is completed, the preform is subjected to additional combinations of densification cycles, including (Vacuum Pitch Infiltration (VPI) followed by carbonization and CVD. Intermediate heat treatment cycles may also be used to enhance densification, and - along with final heat treatment processes - to control material properties.

### EXAMPLES

Example 1. A preform is made by chopping carbonized PAN fiber and depositing it into a rotating mold while concurrently uniformly depositing ground coal tar pitch resin into the mold. A 50:50 weight-% mixture of carbonized PAN fiber and coal tar pitch is employed. A top compaction plate is placed over the fiber/binder combination in the bottom section of the segmented mold. The mold is heated and the materials are compressed into a preform. After compaction, heat is removed from the mold and in approximately 45 minutes the preform (that is, the resin-impregnated fibrous material) is cool enough to be ejected from the mold and processed further. The density of the preform at this point is approximately 1.47 g/cc. The preform is then placed in a constraint fixture and subjected to a rapid carbonization cycle of 80 hours. Once this carbonization cycle is completed, the rigid preform has a density of approximately 1.30 g/cc. The rigid preform is subjected to a cycle of VPI and to a final CVD cycle, producing a finished composite, suitable for use in the manufacture of a brake disc, having a density of approximately 1.75 g/cc.

Example 2. A preform is made by chopping pitch fiber and depositing it into a rotating mold while concurrently uniformly depositing ground synthetic pitch resin into the mold. A 50:50 weight-% mixture of pitch fiber and synthetic pitch resin binder is employed. A top compaction plate is placed over the fiber/binder combination in the bottom section of the segmented mold. The materials are then compressed under temperatures that melt the synthetic pitch resin. The mold is heated and the materials are compressed into a preform. After compaction, heat is removed from the mold and in approximately 45 minutes the preform (that is, the resin-impregnated fibrous material) is cool enough to be ejected from the mold and processed further. The density of the preform at this point is approximately 1.5 g/cc. The preform is then placed in a constraint fixture and subjected to a rapid carbonization cycle of 50 hours. Once this carbonization cycle is completed, the rigid preform has a density of approximately 1.33 g/cc. The rigid preform is subjected to two cycles of VPI and to one final CVD cycle, producing a finished composite, suitable for use in the manufacture of a brake disc, having a density of approximately 1.8 g/cc.

Example 3. A preform is made by chopping carbonized PAN fiber and depositing it into a segmented rotating mold (a mold having two sections) while concurrently uniformly depositing ground coal tar pitch resin particles into both the top and bottom mold segments. A 50:50 weight-% mixture of carbonized PAN fiber and coal tar pitch is employed. A top compaction plate is placed over the fiber/binder combination in the bottom section of the segmented mold. The mold is heated and the materials are compressed under elevated temperature and pressure. After compaction, the bottom mold segment containing compacted fiber/binder is separated from the top portion of the rotating mold and is ready for rapid carbonization. In this Example, the compaction plate is held in place over the compacted materials in the bottom segment with locking pins. The density of the preform at this point is approximately 1.44 g/cc. In this Example, the bottom half of the mold is now the constraint fixture. The fixture containing the compressed preform is now subjected to a rapid carbonization cycle of 60 hours. Once this carbonization cycle is completed, the resulting rigid preform has a density of approximately 1.35 g/cc. The rigid preform is subjected to a cycle of VPI and to a final CVD cycle, producing a finished composite, suitable for use in the manufacture of a brake disc, having a density of approximately 1.72 g/cc.

## Claims

1. A process for producing a carbon-carbon composite preform, which process comprises the steps of:
providing short carbon fiber segments or short carbon fiber precursor segments, e.g., partially carbonized oxidized PAN fiber segments;
providing a pitch in particulate form, e.g., coal tar mesophase pitch particles ranging in diameter from 50 to 500 microns, said pitch having a softening point of 80°C or greater;
combining a blend comprising said fiber segments and pitch particles in a mold;
subjecting the resulting mixture of fibers and pitch in the mold to a pressure ranging from 30 psi to 500 psi at a temperature above the melting/softening point of the pitch but below 350° C to create an uncarbonized preform;
cooling the preform to below its softening point and removing it from the mold;
placing the preform in a constraint fixture that allows the preform to retain its shape when heated above the melting point of the pitch binder; and
carbonizing the combined components in the constraint fixture at a temperature in the range of 650°C -15 00° C for a period of time of from 15 hours -100 hours to provide a preform having a density in the range 0.8-1.6 grams per cubic centimeter.

2. The process of claim 1, wherein the relative weight amounts of fiber component and pitch component that are combined range from 30:70 to 70:30, preferably about 50:50.

3. The process of claim 1, in which the fiber/pitch blend contains additives, e.g. particulate titanium carbide, to enhance friction and/or wear properties of a brake disc manufactured from the preform.

4. The process of claim 1, wherein the mixture of fibers and pitch in the mold is subjected to a pressure of from 100 psi to 300 psi at a temperature that ranges from 10C° to 3 0C° above the softening point of the pitch in the mold.

5. The product of the process of claim 1.

6. The product of the process of claim 2.

7. The product of the process of claim 3.

8. The product of the process of claim 4.

9. An improved method for manufacturing a brake disc, which process comprises the steps of:
providing short carbon fiber segments or short carbon fiber precursor segments;
providing a pitch in particulate form, said pitch having a softening point of 80°C o r greater;
combining a blend consisting essentially of said fiber segments and pitch particles in an annular mold cavity having the dimensions of a brake disc;
subjecting the resulting mixture of fibers and pitch in the mold to a pressure ranging from 50 psi to 500 psi at a temperature above the melting point of the pitch but below 350° C to create an uncarbonized preform;
cooling the preform and removing it from the mold;
placing the preform in a constraint fixture that allows the preform to retain its shape when heated above the melting point of the pitch binder;
carbonizing the combined components in the constraint fixture at a temperature in the range of 750°C -15 00° C for a period of time of from 15 hours -100 hours to provide a preform having a density in the range 0.8-1.6 grams per cubic centimeter; and
finishing the preform to provide the brake disc.

10. The method of claim 9, wherein the fiber segments in the fiber/pitch blend comprise chopped tow, the fiber/pitch blend comprises up to 5 weight-%titanium carbide friction enhancers, and the ratio of fibers to binder in the blend is approximately 50:50.
